# EUROPEAN PATENT APPLICATION

(11) **EP 4 803 808 A2**
(43) Date of publication of application: **09.09.2026**
(21) Application number: 26151931.8
(22) Date of filing: 14.01.2026
(51) Int. Cl.: F24C 7/08

(54) **COOKING DEVICE**

(30) Priority: 05.03.2025 CN 202510261434
(71) Applicant: Shenzhen Typhur Technology Co., Ltd, Shenzhen, Guangdong 518067 (CN)
(72) Inventor: CHEN, Zuxiang, Shenzhen, Guangdong 518067 (CN); ZHANG, Hong, Shenzhen, Guangdong 518067 (CN); WEI, Xiang, Shenzhen, Guangdong 518067 (CN); CHEN, Xuchao, Shenzhen, Guangdong 518067 (CN); MA, XiaoKang, Shenzhen, Guangdong 518067 (CN)
(74) Representative: KIPA AB

(57) **Abstract**

A cooking device comprises: a main body, the main body comprising a cooking cavity for cooking food; a temperature measuring probe, the temperature measuring probe for inserting into the food to detect the temperature inside the food; and a probe box, the probe box for detachably mounting the temperature measuring probe; an outer surface of the main body being provided with a storage position, the main body comprising a coupling structure defined at the storage position, the coupling structure for detachably fixing the probe box to the main body; when the probe box is connected to the main body, at least a part of the probe box protrudes from the outer surface of the main body. The coupling structure may also be for detachably fixing the temperature measuring probe to the main body.

## Description

### Technical Field

The present invention relates to the technical field of food processing equipment, and in particular to a cooking device.

### Background Art

In cooking devices such as electric ovens and air fryers, to better control the heating temperature of food, a temperature sensor may be defined in a cooking cavity for placing the food, thereby detecting the temperature in the cooking cavity. However, the temperature detected by the above temperature sensor is the air temperature in the cooking cavity or the temperature of internal components, and cannot accurately determine the internal temperature of the cooked food, which may lead to poor cooking results. Currently, some cooking devices are used in conjunction with a temperature measuring probe, which can be inserted into the interior of the cooked food to sense the temperature inside the food, facilitating precise temperature control and improved cooking results.

The temperature measuring probe is generally a wired probe, which is connected to the main body of the cooking device through a cable and a plug at the end of the cable during use. However, when the cable enters the cooking cavity from the cavity door of the cooking cavity, it is easy to cause a gap when the cavity door is closed, resulting in heat leakage and reduced cooking efficiency. If the cable of the temperature measuring probe is connected to the main body from inside the cooking cavity, the plug connection part is prone to poor contact due to high temperature, humidity, and other influences. Moreover, the use and storage of wired probes are relatively inconvenient.

There are also a few temperature measuring probes that use wireless probes, which do not need to be connected to the main body through cables. However, if the wireless probe is defined on the cooking device, there may be issues such as the shell of the cooking device being thin and unable to be defined in the shell, or disposing it in the shell would reduce the thickness of the shell of the cooking device itself or require changes to the shape of the shell, thereby affecting the heating and insulation performance of the cooking cavity of the cooking device. On the other hand, since the temperature measuring probe is inserted into the food during use, there will be residual moisture or grease on its needle body, and long-term contact with the charging contacts will also leave stains on the charging contacts, leading to poor contact during charging.

### Summary

The present invention mainly solves the technical problem that the temperature measuring probe of the cooking device is not easy to store.

In one aspect, one embodiment provides a cooking device.

A cooking device comprising:
a main body, the main body comprising a cooking cavity for cooking food;
a temperature measuring probe, the temperature measuring probe for inserting into the food to detect the temperature inside the food;
and a probe box, the probe box for detachably mounting the temperature measuring probe;
an outer surface of the main body being provided with a storage position, the main body comprising a coupling structure defined at the storage position, the coupling structure for detachably fixing the probe box to the main body; when the probe box is connected to the main body, at least a part of the probe box protrudes from the outer surface of the main body.

In one embodiment, the outer surface of the main body is provided with a mounting groove, the mounting groove forming the storage position, a side of the probe box for connecting with the main body having an embedding portion, when the probe box is connected to the main body, the embedding portion being embedded in the mounting groove;
a groove wall of the mounting groove having a slope surface, the slope surface making an inner cavity size of the mounting groove gradually increase from a groove bottom to a groove opening; the embedding portion having a positioning surface, when the probe box is connected to the main body, the positioning surface matching the slope surface to position the probe box in the mounting groove.

In one embodiment, the probe box is fixed to the main body by magnetic attraction.

In one embodiment, the main body comprises a protective cover, the protective cover for shielding the probe box, the protective cover having an open state and a closed state.

In one aspect, one embodiment provides another cooking device comprising:
a main body, the main body comprising a cooking cavity for cooking food;
and a temperature measuring probe, the temperature measuring probe for inserting into the food to detect the temperature inside the food;
an outer surface of the main body being provided with a storage position, the main body comprising a coupling structure defined at the storage position, the coupling structure for detachably fixing the temperature measuring probe to the main body; when the temperature measuring probe is connected to the main body, at least a part of the temperature measuring probe protrudes from the outer surface of the main body.

In one embodiment, the outer surface of the main body is provided with a mounting groove, the mounting groove forming the storage position.

In one embodiment, the main body comprises a shell, a shell wall of the shell having a thinned portion, the thinned portion forming the mounting groove on an outer side surface of the shell wall.

In one embodiment, the main body comprises a control panel component, a top surface and a part of a front side surface of the main body being respectively formed by a top surface and a front side surface of the control panel component, the storage position being defined on the top surface of the control panel component.

In one embodiment, the storage position is defined at least at one of the following positions: a top surface of a cabinet of the main body, a bottom surface of the cabinet, a side surface of the cabinet, an outer side surface of a cooking cavity opening and closing member, an outer side surface of a handle.

In one embodiment, the temperature measuring probe is a wireless probe, the main body comprising a probe charging structure defined at the storage position, the temperature measuring probe being provided with a charging adaptation structure, the charging adaptation structure for realizing electric energy transmission with the probe charging structure in a wired or wireless manner.

In one embodiment, the probe charging structure comprises a charging contact for transmitting electric energy, the charging contact being exposed on the outer surface of the main body.

According to a cooking device in an embodiment of the present application, the outer surface of the main body is provided with a storage position, the main body comprises a coupling structure defined at the storage position, the probe box/temperature measuring probe can be detachably fixed to the main body through the coupling structure, thereby realizing storage of the temperature measuring probe; moreover, since the storage position is defined on the outer surface of the main body, the temperature measuring probe can be stored on the outer side of the main body, facilitating user access and storage; at the same time, when the probe box/temperature measuring probe is connected to the main body, at least a part of the probe box/temperature measuring probe protrudes from the outer surface of the main body, which, on the basis of realizing storage of the temperature measuring probe on the main body, helps to avoid the temperature measuring probe occupying space inside the main body.

When the cooking device is provided with a probe charging structure, and the probe charging structure comprises a charging contact exposed on the outer surface of the main body, it can facilitate the user to clean the charging contact of the temperature measuring probe and reduce poor contact.

### Brief Description of the Drawings

FIG. 1 is a schematic structural diagram of a cooking device in one embodiment;
FIG. 2 is a front view of a cooking device in one embodiment;
FIG. 3 is a top view of a cooking device in one embodiment;
FIG. 4 is a sectional view along A-A in FIG. 3;
FIG. 5 is an enlarged view of part A in FIG. 4;
FIG. 6 is a schematic structural diagram of a cooking device in one embodiment after hiding the temperature measuring probe and the probe box;
FIG. 7 is a schematic structural diagram of a temperature measuring probe and a probe box in one embodiment;
FIG. 8 is a sectional view of a temperature measuring probe and a probe box in one embodiment;
FIG. 9 is another sectional view of a temperature measuring probe and a probe box in one embodiment;
FIG. 10 is a sectional view of a coupling portion between a probe box and a temperature measuring probe in one embodiment;
FIG. 11 is a schematic diagram when a probe box is separated from a main body in one embodiment.

Reference numerals in the figures correspond to the following feature names:
1, main body; 11, cooking cavity; 12, cabinet; 121, thinned portion; 13, cooking cavity opening and closing member; 14, mounting groove; 141, slope surface; 15, magnetic attraction member; 16, handle;
2, probe box; 21, box opening; 22, needle removal notch; 23, needle box groove; 24, magnetic attraction adaptation member; 25, first box body; 26, second box body; 261, perforation; 27, buckle; 28, positioning surface;
3, temperature measuring probe; 31, probe charging member; 311, probe positive electrode; 312, probe negative electrode; 32, needle head;
4, charging module; 41, charging contact member; 42, circuit board;
5, control panel component.

### Detailed Description

The present application will be further described in detail below through specific embodiments in conjunction with the accompanying drawings. Similar elements in different embodiments are assigned associated similar element numbers. In the following embodiments, many detailed descriptions are provided to enable the present application to be better understood. However, those skilled in the art can easily recognize that some features may be omitted in different situations, or may be replaced by other elements, materials, or methods. In some cases, some operations related to the present application are not shown or described in the specification to avoid overwhelming the core part of the present application with excessive descriptions, and for those skilled in the art, detailed descriptions of these related operations are not necessary, as they can fully understand the related operations based on the descriptions in the specification and general technical knowledge in the art.

In addition, the features, operations, or characteristics described in the specification may be combined in any appropriate manner to form various embodiments. At the same time, the steps or actions in the method description may also be exchanged or adjusted in sequence in a manner obvious to those skilled in the art. Therefore, the various sequences in the specification and drawings are only for clearly describing a certain embodiment and do not mean a required sequence unless otherwise specified that a certain sequence must be followed.

In the description herein, it should be understood that the terms "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like indicate orientations or positional relationships based on those shown in the drawings, and are only for convenience of describing the present application and simplifying the description, rather than indicating or implying that the referred device or element must have a specific orientation, be constructed and operated in a specific orientation, and therefore should not be construed as limiting the present application.

In addition, the terms "first" and "second" are used for descriptive purposes only and should not be understood as indicating or implying relative importance or implicitly indicating the number of technical features indicated. Thus, a feature defined as "first" or "second" may explicitly or implicitly include one or more of such features. In the description of the present application, "multiple" means two or more, unless otherwise expressly and specifically defined.

In the present application, unless otherwise expressly specified and defined, terms such as "mounted," "connected," "coupled," "fixed," and the like should be understood in a broad sense, for example, it may be a fixed connection, a detachable connection, or integral; it may be a mechanical connection or an electrical connection; it may be a direct connection, an abutment, or an indirect connection through an intermediate medium; it may be the internal communication of two elements or the interaction relationship between two elements. For those of ordinary skill in the art, the specific meanings of the above terms in the present application can be understood according to specific situations.

The embodiments described in the specific implementations, if not contradictory, can be combined in any suitable manner, for example, different embodiments can be combined to form different implementations. To avoid unnecessary repetition, various possible combinations of the embodiments are not described separately.

In the embodiments of the present application, for a cooking device provided with a temperature measuring probe, to facilitate storage of the temperature measuring probe, the outer surface of the main body is provided with a storage position, the temperature measuring probe can be detachably fixed to the storage position, or the temperature measuring probe can be mounted to the probe box, and the probe box is then detachably fixed to the storage position, which facilitates convenient access and storage of the temperature measuring probe, and at least a part of the probe box/temperature measuring probe protrudes from the outer surface of the main body, helping to avoid the temperature measuring probe occupying space inside the main body.

The cooking device of the present application is further described below in conjunction with the drawings.

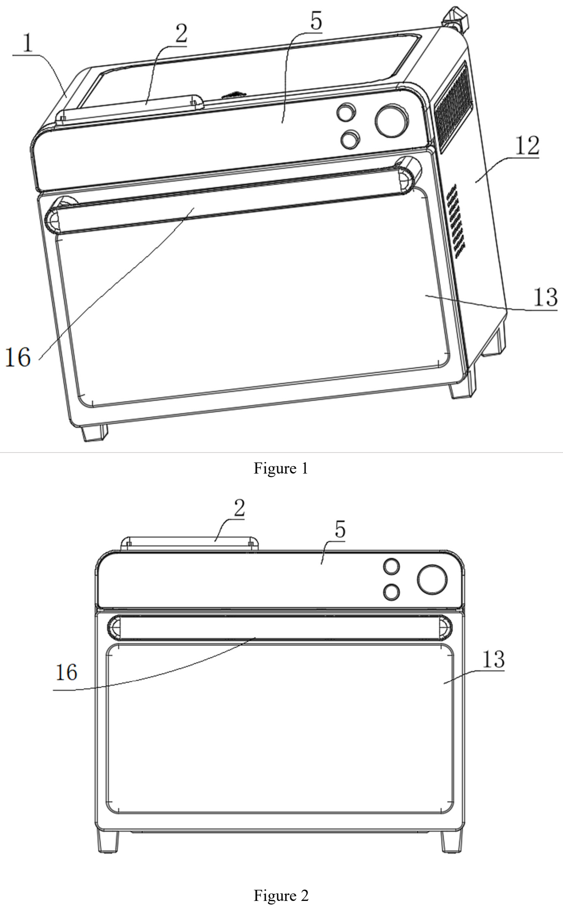

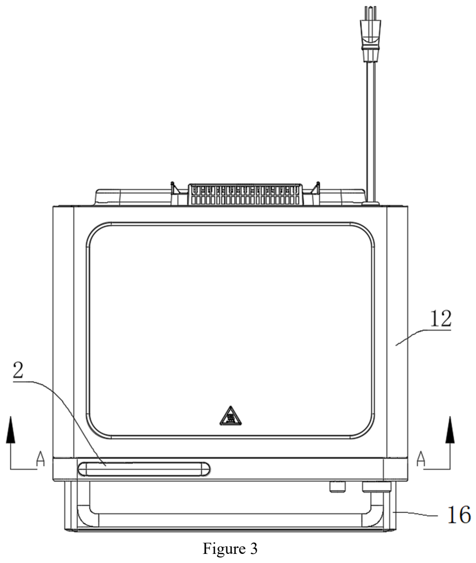

In one embodiment, referring to FIGS. 1 to 4, the cooking device comprises a main body 1, a probe box 2, and a temperature measuring probe 3, the main body 1 comprising a cooking cavity 11 for cooking food. The probe box 2 is detachably mounted on the main body 1, and the temperature measuring probe 3 is detachably mounted in the probe box 2. In this way, the probe box 2 can be mounted on the main body 1 and detached from the main body 1, and the temperature measuring probe 3 can be taken out from the probe box 2 for temperature measurement and placed into the probe box 2 for storage.

Regarding the cooking device, in one embodiment, the cooking device is an oven. In some other embodiments, the cooking device may also be other devices, such as an air fryer.

In one embodiment, the temperature measuring probe 3 is a wireless probe, structurally independent of the main body 1, and does not rely on a cable to connect with the main body 1 during operation.

In one embodiment, referring to FIGS. 1 and 2, the main body 1 comprises a cabinet 12 and a cooking cavity opening and closing member 13, the cabinet 12 and the cooking cavity opening and closing member 13 enclosing the cooking cavity 11. The cooking cavity opening and closing member 13 can be opened and closed to take and place food from the cooking cavity 11.

The cooking cavity opening and closing member 13 may be, for example, a box door, a drawer-type food carrier, a cover with an inner cavity (the inner cavity for forming part of the space of the cooking cavity 11), etc. In a specific embodiment, the cooking device may be an oven, and the cooking cavity opening and closing member 13 is a box door hinged on the cabinet 12. For another example, the cooking device may be an air fryer, and the cooking cavity opening and closing member 13 is a drawer-type food carrier that can be drawn out from the cabinet 12. For another example, the cooking device may be an air fryer, and the cooking cavity opening and closing member 13 is a cover hinged on the top of the cabinet, the cover having an inner cavity, and after the cover is closed, the inner cavity on the cover and the inner cavity in the cabinet together form the cooking cavity.

In one embodiment, referring to FIGS. 1 to 4, the probe box 2 is mounted on the outer surface of the main body 1, which facilitates the mounting and detachment of the probe box 2. Specifically, the outer surface of the main body 1 is provided with a storage position, and the main body 1 comprises a coupling structure defined at the storage position, the coupling structure for detachably fixing the probe box 2 to the main body 1.

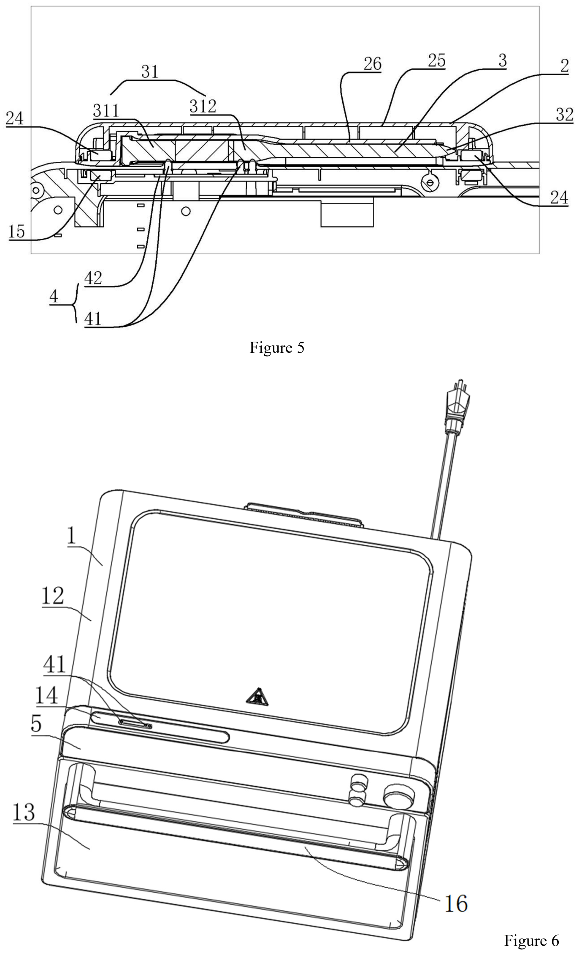

In a specific embodiment, referring to FIG. 6, the main body 1 has a mounting groove 14, the mounting groove 14 forming the storage position, and the probe box 2 can be positioned and mounted in the mounting groove 14. Through the positioning function of the mounting groove 14, it is convenient to determine the storage position of the probe box 2, thereby improving the mounting convenience of the probe box 2. In addition, providing the mounting groove 14 also helps to avoid the probe box 2 protruding too much from the main body 1, thereby avoiding affecting the aesthetics of the device and preventing the probe box 2 from being easily touched by the user, affecting the user's operation of the cooking device.

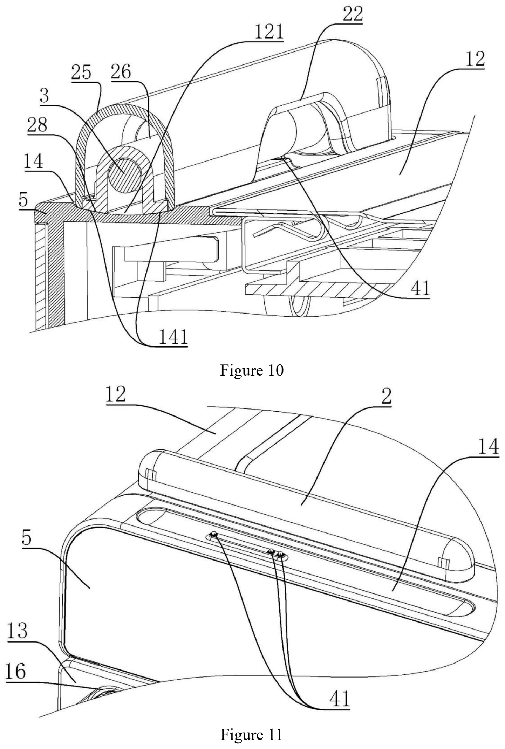

In one embodiment, referring to FIG. 10, the main body 1 comprises a shell, a shell wall of the shell having a thinned portion 121, the thinned portion 121 forming the mounting groove 14 on an outer side surface of the shell wall. By providing the above thinned portion 121 to form the mounting groove 14, on the basis of meeting the storage requirements of the probe box 2, it helps to avoid changing the existing structure inside the main body 1 and facilitates cleaning of the storage position. In some other embodiments, the depth of the mounting groove 14 may be increased or decreased, and the shape of the mounting groove 14 may also be replaced, for example, the side wall of the mounting groove 14 may be parallel to the depth direction of the mounting groove 14; in addition, the mounting groove 14 may also be formed by concave deformation of the shell wall of the shell.

Those skilled in the art can understand that the storage position may be defined at least at one of the following positions: the top surface of the cabinet 12 of the main body 1, the bottom surface of the cabinet 12, the side surface of the cabinet 12 (for example, the left side surface, right side surface, or rear side surface in FIG. 1), the outer side surface of the cooking cavity opening and closing member 13, the outer side surface of the handle 16. In this way, the storage position can be exposed to the outside of the main body 1, and the user does not need to perform operations such as opening the door, and can directly take and place the probe box 2, thereby facilitating operational convenience. When the storage position is defined on the outer side surface of the handle 16, taking the handle 16 shown in FIG. 1 as an example, the storage position may be defined at any position of the handle 16, such as the top, bottom, or front. In addition, those skilled in the art can understand that more than two storage positions may be defined on the main body 1, and the wireless probe may select any storage position for storage.

In a specific embodiment, the main body 1 comprises a control panel component 5, and the control panel component 5 may be provided with structures such as operation buttons and a display screen. The control panel component 5 is located at the intersection of the front side surface and the top surface of the main body 1, the top surface and a part of the front side surface of the main body 1 may be respectively formed by the top surface and the front side surface of the control panel component 5, and the storage position is defined on the top surface of the control panel component 5. Since the setting position of the operation panel on the main body 1 is often a position convenient for user operation, disposing the storage position on the top surface of the control panel component 5 facilitates user access and cleaning of the temperature measuring probe 3, and does not affect the normal use of the device; at the same time, the storage position defined near the control panel component 5 can facilitate wiring of the circuit to the storage position. A side of the probe box 2 for connecting with the main body 1 has an embedding portion, and when the probe box 2 is connected to the main body 1, the embedding portion is embedded in the mounting groove 14, which can position the probe box 2 so that the storage position of the probe box 2 on the main body 1 is relatively fixed. Referring to FIG. 10, the embedding portion forms an arc-shaped protrusion at the bottom of the probe box 2.

When the probe box 2 is connected to the main body 1, at least a part of the probe box 2 protrudes from the outer surface of the main body 1, and the protruding part not only facilitates the user to remove the probe box 2 from the main body 1, but also helps to avoid designing the internal structure of the main body 1 to leave accommodation space for the probe box 2.

In one embodiment, the groove wall of the mounting groove 14 has a slope surface 141, the slope surface 141 making the inner cavity size of the mounting groove 14 gradually increase from the groove bottom to the groove opening, the slope surface 141 making the inner cavity size of the mounting groove 14 gradually increase from the groove bottom to the groove opening; correspondingly, the embedding portion has a positioning surface 28, and when the probe box 2 is connected to the main body 1, the positioning surface 28 matches the slope surface 141 to position the probe box 2 in the mounting groove 14. When the user places the probe box 2 into the storage position, the above slope surface 141 structure can guide the probe box 2 to be positioned to a set position in the mounting groove 14, thereby facilitating the limitation of the placement posture of the probe box 2.

Specifically, the slope surface 141 may be a curved surface structure or a flat inclined surface structure. For example, the bottom of the mounting groove 14 may be in a concave arc shape or triangular shape toward the main body 1. As shown in FIGS. 10 and 11, the mounting groove 14 has a length direction and a width direction, at least part of the groove walls on both sides in the width direction of the mounting groove 14 form slope surfaces 141, and at least part of the groove walls on both sides in the length direction of the mounting groove 14 also form slope surfaces 141, so that the probe box 2 can be conveniently positioned along both the length direction and the width direction of the mounting groove 14. It should be noted that the entire groove wall of the mounting groove 14 may be the slope surface 141, or the slope surface may be defined only in a partial area. Similarly, the positioning surface may cover the entire bottom surface of the embedding portion of the probe box 2, or may be located only on a partial surface of the embedding portion.

It should be noted that in the above embodiments, the storage position is formed by the mounting groove 14, and in some other embodiments, the storage position may also be in other structural forms. For example, the storage position may be a flat area or a boss area provided with a coupling structure on the main body 1.

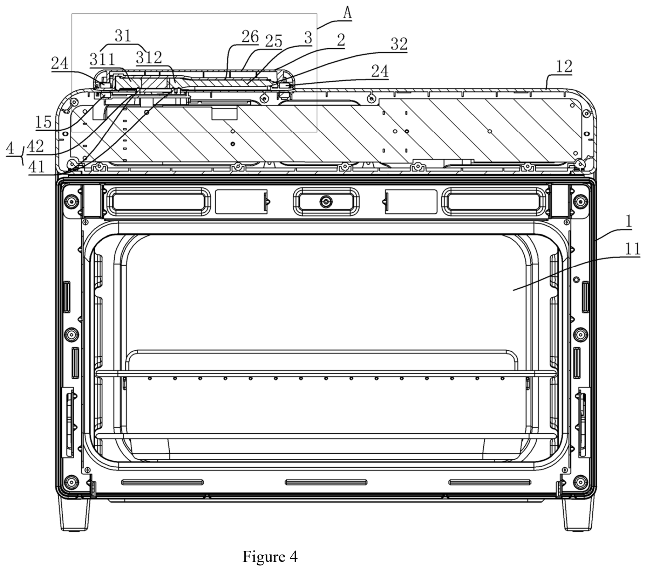

The coupling structure of the storage position is for detachably fixing the probe box 2 to the main body 1. Regarding the detachable mounting manner of the probe box 2 and the main body 1, in one embodiment, referring to FIGS. 4 and 5, the probe box 2 is fixed to the main body 1 by magnetic attraction, and the coupling structure is a magnetic attraction structure.

Specifically, referring to FIGS. 4 and 5, the probe box 2 comprises a magnetic attraction adaptation member 24, the main body 1 comprises a magnetic attraction member 15, and magnetic attraction force can be generated between the magnetic attraction member 15 and the magnetic attraction adaptation member 24, so that the probe box 2 is fixed to the main body 1 by magnetic attraction force, realizing the fixation of the probe box 2 and the main body 1. When the probe box 2 needs to be removed, the user applies force to the probe box 2 to overcome the magnetic attraction force, and the probe box 2 can be removed from the main body 1.

Those skilled in the art can understand that one of the magnetic attraction member 15 and the magnetic attraction adaptation member 24 may be an object made of magnetic material, such as neodymium iron boron magnet, ferrite magnet, alnico magnet, and samarium cobalt magnet, which can form a magnetic field; and the other of the magnetic attraction member 15 and the magnetic attraction adaptation member 24 may be an object made of a material that can be attracted by a magnetic field, such as ferromagnetic materials like iron, cobalt, nickel. Of course, both the magnetic attraction member 15 and the magnetic attraction adaptation member 24 may also be objects made of magnetic materials, generating magnetic attraction force by attracting different magnetic poles.

When the magnetic attraction adaptation member 24 on the probe box 2 is made of a magnetic material that can form a magnetic field, for the case where the storage position of the main body 1 is a magnetic material that can be attracted by a magnetic field, the magnetic attraction member 15 on the main body 1 may also be omitted, and the magnetic attraction adaptation member 24 that can form a magnetic field is directly attracted to the storage position. For example, if the top surface of the control panel component 5 is a metal material that can be attracted by a magnetic field, it may be considered to directly attract the probe box 2 to the top surface of the control panel component 5 through the magnetic attraction adaptation member 24 in the probe box 2 that can form a magnetic field.

In one embodiment, referring to FIGS. 4 and 5, the main body 1 comprises a magnetic attraction member 15, the magnetic attraction member 15 being defined on a side of the shell facing away from the outer surface, which helps to avoid the magnetic attraction member 15 falling off from the main body 1 during use. Regarding the mounting manner of the magnetic attraction adaptation member 24, in one embodiment, referring to FIGS. 5, 7 to 9, the probe box 2 comprises a first box body 25 and a second box body 26, the second box body 26 being snap-fitted and fixed to the first box body 25, and the magnetic attraction adaptation member 24 being clamped between the first box body 25 and the second box body 26. In some other embodiments, the magnetic attraction adaptation member 24 may also be fixed in the probe box 2 in other ways, such as adhesive fixing.

In addition to using magnetic attraction fixing, in some other embodiments, the probe box 2 may be fixed to the main body 1 in other ways, such as snap-fit or interference fit. When using snap-fit, illustratively, the main body may comprise elastic snap arms protruding from the surface of the storage position, the elastic snap arms forming a snap space for mounting the probe box 2, and the probe box 2 can be fixed in the snap space by the elastic snap arms. This snap-fit manner may also refer to the detachable mounting manner of the temperature measuring probe 3 and the probe box 2 below. At this time, the probe box 2 may completely protrude from the outer surface of the main body 1. When using interference fit, illustratively, the groove wall of the mounting groove 14 may interfere fit with the side wall of the temperature measuring probe 3, forming a force for organizing the detachment of the probe box 2 from the main body 1.

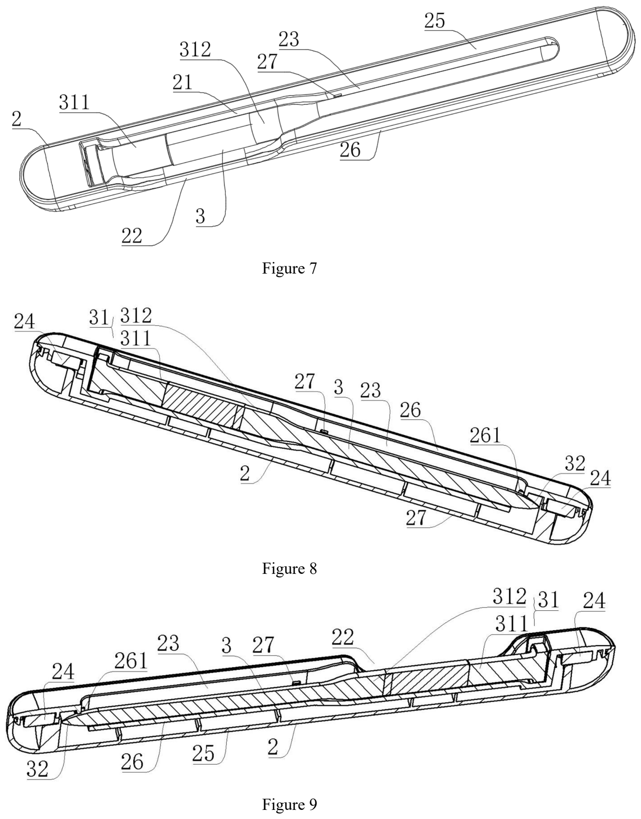

Regarding the detachable mounting manner of the temperature measuring probe 3 and the probe box 2, in one embodiment, referring to FIGS. 7 and 8, a needle box groove 23 in the probe box 2 has a buckle 27, and the temperature measuring probe 3 is snapped in the needle box groove 23. One end of the temperature measuring probe 3 is a handheld operation end, and the other end is a temperature measuring end, usually the temperature measuring end is a tip. In some other embodiments, in addition to snapping, the temperature measuring probe 3 may also be detachably fixed to the probe box 2 by magnetic attraction.

Specifically, in one embodiment, referring to FIGS. 7 to 9, the second box body 26 is clamped in the first box body 25, and the needle box groove 23 is on the second box body 26. To stably mount the temperature measuring probe 3 in the needle box groove 23, in one embodiment, referring to FIGS. 8 and 9, the box wall of the second box body 26 has a perforation 261 for the needle head 32 of the temperature measuring probe 3 to pass through, so that after the temperature measuring probe 3 is mounted to the needle box groove 23, it is more stable under the limiting action of the perforation 261 and less likely to come out of the needle box groove 23. When the temperature measuring probe 3 needs to be taken out, apply outward force to the needle handle of the temperature measuring probe 3 to tilt the temperature measuring probe 3, and then draw the needle head 32 of the temperature measuring probe 3 out of the perforation 261.

In some other embodiments, a protective structure may also be added in the needle box groove 23 to improve the dust-proof, vibration-resistant, and other performances of the temperature measuring probe 3, further improving the life of the temperature measuring probe 3.

In an embodiment not shown, the main body 1 has a protective cover, the probe box 2 is detachably mounted in the mounting groove 14, the protective cover covers the groove opening of the mounting groove 14 for covering the probe box 2 to shield and protect the temperature measuring probe 3, preventing external substances from contaminating the temperature measuring probe 3, which helps to improve its service life, and can also reduce the influence of the external environment on the temperature measuring probe 3, enhancing the safety of the temperature measuring probe 3. In cooking devices such as ovens and air fryers, the protective cover design can be optimized according to the appearance and function of the device, making it convenient to use and not affecting the aesthetics of the device. Regarding the structure of the protective cover, in one embodiment, the protective cover is a flip cover hinged on the cabinet 12. In another embodiment, the protective cover is fixed on the cabinet 12 by a buckle 27, and the protective cover can be separated from the cabinet 12 after opening.

Of course, in another embodiment, the protective cover introduced in the above embodiments may also be used to maintain the position of the probe box 2. To make the position of the probe box 2 more stable, the protective cover can apply a certain pressure to the probe box 2 after covering, which can also realize the detachable mounting of the probe box 2 and the main body 1.

When the temperature measuring probe 3 is a wireless probe, to ensure the normal operation of the temperature measuring probe 3, the temperature measuring probe 3 comprises a probe battery (not shown in the figure). To realize charging of the temperature measuring probe 3, the main body 1 comprises a probe charging structure defined at the storage position, the temperature measuring probe 3 is provided with a charging adaptation structure, and the charging adaptation structure is for realizing electric energy transmission with the probe charging structure in a wired or wireless manner.

In one embodiment, the charging adaptation structure on the temperature measuring probe 3 comprises a probe charging member 31. Correspondingly, the probe charging structure on the main body 1 comprises a charging module 4, the charging module 4 is in the main body 1, and the charging module 4 is for electrically connecting with the probe charging member 31 after the temperature measuring probe 3 is loaded into the probe box 2 and the probe box 2 is mounted on the main body 1, so as to charge the temperature measuring probe 3.

Regarding the charging manner of the temperature measuring probe 3, in one embodiment, referring to FIGS. 4 and 5, the charging module 4 and the probe charging member 31 adopt contact-type electrical connection. Specifically, the charging module 4 comprises a charging contact member 41, the charging contact member **41** for conductive contact with the probe charging member 31 to realize the electrical connection between the charging module 4 and the probe charging member 31.

Further, referring to FIGS. 4 to 7, the probe box 2 has a box opening 21 for putting in and taking out the temperature measuring probe 3, after the probe box 2 is mounted on the main body 1, the box opening 21 faces the main body 1, and the charging contact member **41** extends into the probe box 2 through the box opening 21 to make conductive electrical contact with the probe charging member 31. In this way, after the probe box 2 is mounted on the main body 1, the box opening 21 is shielded by the main body 1, and debris such as dust is not easy to enter. In addition, the charging contact member **41** extending into the probe box 2 through the box opening 21 also makes full use of the structure of the probe box 2, so that the probe box 2 does not need to separately open a socket for the charging contact member 41 to extend into. Of course, in some other embodiments, a contact member socket for the charging contact member 41 to extend into the probe box 2 may also be separately opened.

In some other embodiments not shown, the probe box 2 comprises a box body and a box cover, the box opening 21 may be on the box body, the temperature measuring probe 3 is loaded and taken out of the box body through the box opening 21, the box cover covers the box opening 21, at this time the box opening 21 may face away from the main body 1, and the contact member socket for the charging contact member 41 to extend into the probe box 2 is on the box body. According to actual needs, only the box cover may be opened to take out the wireless temperature measuring probe 3, leaving the box body on the main body 1. Of course, when the box body needs to be removed, the box body may also be removed from the main body 1.

The probe box 2 has a needle box groove 23, the temperature measuring probe 3 is mounted in the needle box groove 23, to facilitate taking out the temperature measuring probe 3 from the probe box 2, in one embodiment, referring to FIGS. 7, 9, and 10, the box side wall of the probe box 2 has a needle removal notch 22 communicating with the box opening 21. Specifically, the needle removal notch 22 is on the groove side wall of the needle box groove 23. In some other embodiments, a special-shaped needle box groove 23 may also be defined in the probe box 2, after the temperature measuring probe 3 is loaded into the needle box groove 23, operation space for taking out the temperature measuring probe 3 is left on both sides of the temperature measuring probe 3.

The charging contact member 41 and the probe charging member 31 may adopt various forms of conductive contact:
For example, in one embodiment, referring to FIGS. 4 to 7, to facilitate conductive contact between the probe charging member 31 and the charging contact member 41, the surface of the probe charging member 31 in contact with the charging contact member 41 is an annular surface. In one embodiment, referring to FIGS. 4 and 5, the charging contact member 41 is a charging contact. Specifically, in one embodiment, the charging contact may be a spring contact finger, such as a pogo pin, which can realize pressing with the probe charging member 31 through the spring contact finger, realizing reliable electrical connection between the charging contact member 41 and the probe charging member 31.

For another example, in an embodiment not shown, the probe charging member 31 may also be conductively plugged with the charging contact member 41, one of the probe charging member 31 and the charging contact member 41 has a socket, the other has a plug for inserting into the socket, and after the plug is plugged into the socket, the conductive connection between the probe charging member 31 and the charging contact member 41 is realized.

In one embodiment, the charging contact may be exposed on the outer surface of the main body 1 to facilitate the user cleaning the charging contact. Moreover, during the movement of the temperature measuring probe 3 toward the storage position, it can directly contact the charging contact to form conduction, without additional plugging operations, and is convenient to use.

Regarding the specific structure of the probe charging member 31, in one embodiment, referring to FIGS. 4 and 5, the probe charging member 31 comprises a probe positive electrode 311 and a probe negative electrode 312, to facilitate conductive contact between the probe charging member 31 and the charging contact member 41, the probe positive electrode 311 and the probe negative electrode 312 are spaced along the length direction of the temperature measuring probe 3. The probe positive electrode 311 and the probe negative electrode 312 respectively form a positive electrode segment and a negative electrode segment in the length direction of the temperature measuring probe 3, the outer peripheral surface of the probe positive electrode 311 is exposed and forms the outer peripheral cylindrical surface of the positive electrode segment, and the outer peripheral surface of the probe negative electrode 312 is exposed and forms the outer peripheral cylindrical surface of the negative electrode segment. In this way, no matter which side the temperature measuring probe 3 is snapped into the needle box groove 23, it can conveniently make conductive contact with the charging contact member 41.

In one embodiment, referring to FIGS. 4 and 5, the charging module 4 comprises a circuit board 42 mounted on the main body 1, and the charging contact member 41 is connected to the circuit board 42. In one embodiment, the number of charging contact members 41 is three, one of which is in conductive contact with the probe positive electrode 311, and the other two are in contact with the probe negative electrode 312.

In addition to using contact-type charging, the charging module 4 and the probe charging member 31 may also use wireless electrical connection. In an embodiment not shown, the charging module 4 is a wireless charging module, and the probe charging member 31 is for realizing wireless charging with the wireless charging module 4 through electromagnetic induction. Through wireless charging, the user only needs to place the temperature measuring probe 3 in the charging area of the cooking device, without plugging any charging contacts, which is more conducive to improving the convenience of use. This design can effectively reduce the wear of the plug interface and improve the service life of the temperature measuring probe 3. In an embodiment not shown, the probe charging member 31 is a first coil, and the first coil is connected to the probe battery. The charging module 4 comprises a second coil, and through electromagnetic induction between the second coil and the probe charging coil, charging of the probe battery is realized.

In addition to disposing the charging module 4 on the handle 16, in one embodiment, the charging module 4 is in a storage box, and the charging module 4 is for conductive connection with the probe charging member 31 so that the charging module 4 can charge the probe battery. The storage box may also have a charging interface, and the charging interface is electrically connected to the charging module 4. The cabinet 12 has a power supply interface for conducting with the power supply system, and the charging interface is for conducting with the power supply interface through an external charging cable.

Of course, in some other embodiments, the cooking device may also comprise a handle power supply module defined in the handle 16, and the handle power supply module is connected to the power supply system in the cabinet 12 through wires. The handle power supply module is in conductive contact with the charging module 4 when the storage box is mounted to the handle 16.

It should be noted that when conductive elements need to be defined on the handle 16, the conductive elements on the handle 16 need to be conducted with the power supply system in the cabinet 12 through wires. For the case where the cabinet 12 is movably connected to the cooking cavity opening and closing member 13, such as the cooking cavity opening and closing member 13 hinged on the cabinet 12, the wires can be led to the power supply system of the cabinet 12 through the handle 16, the cooking cavity opening and closing member 13, and the hinge between the cooking cavity opening and closing member 13 and the cabinet 12. For the case where the cabinet 12 and the cooking cavity opening and closing member 13 are separable, a conductive structure needs to be defined between the cabinet 12 and the cooking cavity opening and closing member 13, such as a plug on one of the cabinet 12 and the cooking cavity opening and closing member 13, and a socket on the other. After the cooking cavity opening and closing member 13 is closed, the plug conducts with the socket, and after the cooking cavity opening and closing member 13 is opened, the plug separates from the socket. Therefore, in this case, the temperature measuring probe 3 can only be charged when the cooking cavity opening and closing member 13 is closed.

In some other embodiments, the temperature measuring probe 3 may also be provided with a charging port, using a separately configured charger to charge the temperature measuring probe 3, or using a charging cable to conduct the temperature measuring probe 3 with the power supply system of the cabinet 12 to charge the temperature measuring probe 3. In addition, the temperature measuring probe 3 may also be powered by replaceable batteries.

In one embodiment, the main body 1 comprises a control module for controlling the temperature inside the main body 1, and the control module is wirelessly communicatively connected to the temperature measuring probe 3 to receive measurement data from the temperature measuring probe 3. The control module can control the cooking temperature inside the main body 1 to be in a target range based on the measurement data of the temperature measuring probe 3. When the measured temperature of the temperature measuring probe 3 is higher than the target temperature, the control module can control the main body 1 to cool down, and when the measured temperature of the temperature measuring probe 3 is lower than the target temperature, the control module can control the main body 1 to heat up. Since the temperature measuring probe 3 is for inserting into the cooked food to measure the precise temperature inside the food, precise temperature control can be achieved through the temperature measuring probe 3, especially for foods like beef. Due to the precise temperature control of the temperature measuring probe 3, the cooking effect is better compared to traditional ovens. The control module may be defined in the control panel component 5 or in other parts of the main body 1.

Specifically, in one embodiment, the main body 1 comprises a heating element, the control module is connected to the heating circuit of the heating element, and the control module can control the heating power of the heating element and the start and stop of the heating element, thereby controlling the cooking temperature of the main body 1.

In one embodiment, the control module comprises a signal receiving module wirelessly communicatively connected to the temperature measuring probe 3, and the signal receiving module is for receiving temperature information measured by the temperature measuring probe 3. In one embodiment, the target temperature of the main body 1 can be set through the control panel component 5. In one embodiment, when the temperature measuring probe 3 is charging, the control panel component 5 can display the charging level of the temperature measuring probe 3.

In one embodiment, referring to FIGS. 1 to 4, when cooking food, open the cooking cavity opening and closing member 13 of the main body 1, remove the probe box 2, take out the temperature measuring probe 3 from the probe box 2 and insert it into the cooked food, and place the food into the cooking cavity 11. The user sets the cooking temperature of the food on the control panel component 5, and then can start the cooking device to cook the food. When the temperature measuring probe 3 needs to be charged, place the temperature measuring probe 3 into the probe box 2, and detachably mount the probe box 2 at a specified position on the main body 1.

It should be noted that since the temperature measuring probe 3 of the present application can be taken out from the probe box 2, the usage method can be set according to user needs, for example, the temperature measuring probe 3 can be placed into the main body 1 and inserted into the cooked food. Of course, when the user needs to measure the air temperature in the main body 1, the temperature measuring probe 3 can also be placed into the main body 1 without inserting into the food.

In the above embodiments, the temperature measuring probe 3 is first mounted to the storage box, then the storage box is fixed to the main body 1, and finally the storage of the temperature measuring probe 3 is realized. In an embodiment not shown, the coupling structure defined at the storage position is for detachably fixing the temperature measuring probe 3 to the main body 1, and the temperature measuring probe 3 can also be directly stored on the main body 1. Illustratively, the coupling structure may be a magnetic attraction structure (for example, disposing the magnetic attraction member 15 on the temperature measuring probe 3), a snap structure, an interference fit structure, etc. In an embodiment not shown, the temperature measuring probe 3 may also be a wired probe, which can also be mounted on the probe box 2 and stored in the storage position on the main body 1, or directly stored in the storage position on the main body 1.

In the present application, the temperature measuring probe 3 can be detachably fixed to the storage position on the outer surface of the main body 1, or after mounting to the probe box 2, the probe box 2 is detachably fixed to the storage position on the outer surface of the main body 1, realizing the storage of the temperature measuring probe 3, and the storage position on the outer surface of the main body 1 can conveniently realize the taking and placing of the temperature measuring probe 3, and the temperature measuring probe 3 or the probe box 2 protruding from the outer surface of the main body 1 can also avoid occupying the internal space of the main body 1. Even if the shell of the cooking device is thin, the embodiments of the present application can store the temperature measuring probe on the shell, and help to avoid significantly reducing the thickness of the shell of the cooking device itself or significantly changing the shape of the shell, thereby helping to avoid affecting the heating and insulation performance of the cooking cavity.

The above uses specific examples to illustrate the present application, which is only used to help understand the present application and is not intended to limit the present application. For those skilled in the art to which the present application belongs, based on the ideas of the present application, several simple deductions, deformations, or substitutions can also be made.

## Claims

1. A cooking device, comprising:
a main body, the main body comprising a cooking cavity for cooking food;
a temperature measuring probe, the temperature measuring probe for inserting into the food to detect the temperature inside the food; and
a probe box, the probe box for detachably mounting the temperature measuring probe;
**characterized in that** an outer surface of the main body being provided with a storage position, the main body comprising a coupling structure defined at the storage position, the coupling structure for detachably fixing the probe box to the main body; when the probe box is connected to the main body, at least a part of the probe box protrudes from the outer surface of the main body.

2. The cooking device according to claim 1, **characterized in that** the outer surface of the main body is provided with a mounting groove, the mounting groove forming the storage position, a side of the probe box for connecting with the main body having an embedding portion, when the probe box is connected to the main body, the embedding portion being embedded in the mounting groove;
a groove wall of the mounting groove having a slope surface, the slope surface making an inner cavity size of the mounting groove gradually increase from a groove bottom to a groove opening; the embedding portion having a positioning surface, when the probe box is connected to the main body, the positioning surface matching the slope surface to position the probe box in the mounting groove.

3. The cooking device according to claim 1, **characterized in that** the probe box is fixed to the main body by magnetic attraction.

4. The cooking device according to claim 1, **characterized in that** the main body comprises a protective cover, the protective cover for shielding the probe box, the protective cover having an open state and a closed state.

5. A cooking device, comprising:
a main body, the main body comprising a cooking cavity for cooking food; and
a temperature measuring probe, the temperature measuring probe for inserting into the food to detect the temperature inside the food;
**characterized in that** an outer surface of the main body being provided with a storage position, the main body comprising a coupling structure defined at the storage position, the coupling structure for detachably fixing the temperature measuring probe to the main body; when the temperature measuring probe is connected to the main body, at least a part of the temperature measuring probe protrudes from the outer surface of the main body.

6. The cooking device according to claim 1, 3, 4, or 5, **characterized in that** the outer surface of the main body is provided with a mounting groove, the mounting groove forming the storage position.

7. The cooking device according to any one of claims 1 to 5, **characterized in that** the main body comprises a control panel component, a top surface and a part of a front side surface of the main body being respectively formed by a top surface and a front side surface of the control panel component, the storage position being defined on the top surface of the control panel component.

8. The cooking device according to any one of claims 1 to 5, **characterized in that** the storage position is defined at least at one of the following positions: a top surface of a cabinet of the main body, a bottom surface of the cabinet, a side surface of the cabinet, an outer side surface of a cooking cavity opening and closing member, an outer side surface of a handle.

9. The cooking device according to any one of claims 1 to 5, **characterized in that** the temperature measuring probe is a wireless probe, the main body comprising a probe charging structure defined at the storage position, the temperature measuring probe being provided with a charging adaptation structure, the charging adaptation structure for realizing electric energy transmission with the probe charging structure in a wired or wireless manner.

10. The cooking device according to claim 9, **characterized in that** the probe charging structure comprises a charging contact for transmitting electric energy, the charging contact being exposed on the outer surface of the main body.

11. The cooking device according to claim 7, wherein the control panel component is configured to display a charging level of the temperature measuring probe, when the temperature measuring probe is charging.

12. The cooking device according to claim 1, wherein the main body comprises a control module for controlling the temperature inside the main body, and the control module is wirelessly communicatively connected to the temperature measuring probe to receive measurement data from the temperature measuring probe; the control module is configured to control cooking temperature inside the main body to be in a target range based on the measurement data of the temperature measuring probe.
